# EUROPEAN PATENT SPECIFICATION

(11) **EP 4 134 761 B1**
(45) Date of publication and mention of the grant of the patent: **14.10.2026**
(21) Application number: 22020388.9
(22) Date of filing: 11.08.2022
(51) Int. Cl.: G05B 19/042, G05B 19/05, H04L 9/40

(54) **METHOD FOR AUTOMATIC TRANSLATION OF LADDER LOGIC TO A SMT-BASED MODEL CHECKER IN A NETWORK**
VERFAHREN ZUR AUTOMATISCHEN ÜBERSETZUNG EINES KONTAKTPLANS IN EINEN SMT-BASIERTEN MODELLPRÜFER IN EINEM NETZWERK
PROCÉDÉ DE TRADUCTION AUTOMATIQUE DE LANGUAGE Á CONTACT À UN CONTRÔLEUR DE MODÈLE BASÉ SUR SMT DANS UN RÉSEAU

(30) Priority: 12.08.2021 US 202117400947
(43) Date of publication of application: 15.02.2023
(73) Proprietor: Nozomi Networks Sagl, 6850 Mendrisio (CH)
(72) Inventor: Bruttomesso, Roberto, 21040 Morazzone (VA) (IT); Di Pinto, Alessandro, 21046 Malnate (VA) (IT); Carullo, Moreno, 21026 Gavirate (VA) (IT); Carcano, Andrea, San Francisco, 94109 (US)
(74) Representative: Praxi Intellectual Property Lugano

(56) References cited:
- EP-A1- 3 715 975
- VERHOEK S B: "SMT solver verification of ladder logic in a production environment Tata Steel Thesis report", 13 August 2020 (2020-08-13), XP093002606, Retrieved from the Internet <URL:https://research.tue.nl/files/167044500/Verhoek_S..pdf> [retrieved on 20221128]
- 26TH: "Alberto Lluch Lafuente Anastasia Mavridou (Eds.) Formal Methods for Industrial Critical Systems", 24 August 2021 (2021-08-24), XP093002575, Retrieved from the Internet <URL:https://link.springer.com/content/pdf/10.1007/978-3-030-85248-1.pdf> [retrieved on 20221128]

## Description

### Field of invention

The present invention relates to the field of network security policy. In particular, the present invention relates to a method for automatic translation of ladder logic to a SMT-based model checker in a network.

### Background art

Even well administered networks are vulnerable to attacks due to the security ramifications of offering a variety of combined services. That is, services that are secure when offered in isolation nonetheless provide an attacker with a vulnerability to exploit when offered simultaneously.

PLCs are at the heart of modern industrial automation systems. Power plants (Dams, Nuclear, Power Grids), Oil and Gas facilities, Mines, are just a few examples of the application areas for PLCs. Being such an important part of our production chains makes them a perfect target for malicious entities that are willing to take control of or damage a site for the purpose of profit or for political and warfare reasons.

One of the easiest methods to tamper with a PLC is to inject it with malicious code, for instance a so called *"Ladder Logic Bomb "* (as recently defined in literature, such as in the paper *"On Ladder Logic Bombs in Industrial Control System "*)*,* consisting of logic that is intended to disrupt the normal operations of a PLC by either persistently changing the behaviour, or by waiting for specific trigger signals to activate malicious behaviour. If a hacker manages to get access to an Engineering Station, he/she may load a program that, for instance, prevents stopping the production environment when the sensors are sending alarming signals. Such a scenario was in fact defined with the malware Triton discovered at a Saudi Arabian petrochemical plant in 2017, that allowed a group of hackers to block some security valves in an oil plant, causing the pipes to reach alarming level of pressure. Notice that this kind of situation may also happen for an accidental introduction of a bug by an honest employee.

It is therefore of outmost importance to provide a Security Manager with automated tools that would help in detecting if any anomalous program is uploaded to a PLC.

Translation of PLC programs into formal models has been extensively studied in the past years, having the scope of reductions to timed automata for the UPPAAL tool, reductions to CTL model checking for SMV, or reductions to other model checkers, wherein much of the emphasis on the previous works is put on the encoding of the timer blocks, and the translation is oftentimes described in terms of automata diagrams, or CTL formulas.

A model-checker is employed to automatically discover violation of properties that are supposed to hold on the system at any point in time. Counterexamples can be derived from the property violations and translated back to real input values for the original system.

There is, therefore, the need to ensure that accurate translation of ladder logic to a SMT-based model checker is generated.
Document Verhoek S B: "SMT solver verification of ladder logic in a production environment Tata Steel Thesis report", 13 August 2020, concerns the verification of programmable logic controller (PLC) code in an industrial environment. The verification method is designed for the ladder logic language according to the IEC- 61311-3 standard. By following the translation full ladder logic programs can be automatically translated to logical formulas. The logical formulas are trivially translated to satisfiability modulo theories (SMT) statements which can be verified using an SMT solver.
Document "Alberto Lluch Lafuente, Anastasia Mavridou (Eds.), "Formal Methods for Industrial Critical Systems", 24 August 2021, describes a number of achievements concerning the use of formal methods and tools for the specification and verification of critical systems from a variety of industrial domains.

### Brief description of the invention

The object of the present invention is to provide a method capable of generate in a most accurate way translation of ladder logic to a SMT-based model checker.

According to the present invention is described, therefore, a method for automatic translation of ladder logic to a SMT-based model checker in a network, according to the attached claims.

### Description of the figures

These and further features and advantages of the present invention will become apparent from the disclosure of the preferred embodiments, illustrated by way of a non-limiting example in the accompanying figures, wherein:
- Figure 1 shows a block diagram according to an embodiment of the present invention;
- Figure 2 shows a block of symbols relating to Contacts and Coils in a Ladder Diagram;
- Figure 3 shows a diagram with combination of Connections and Contacts that store a value in a Coil in a Ladder Diagram.
- Figure 4 shows a block of symbols relating to Functions in a Ladder Diagram;
- Figure 5 shows the diagram of Figure 3 enriched with some Functions of Figure 4;
- Figure 6 shows a block of schematic circuit representations in an Intrepid Model.

### Detailed description of the invention.

The present invention relates to a method for automatic method for automatic translation of ladder logic to a SMT-based model checker in a network.

The method according to the present invention finds a useful application in any kind of physical infrastructures or automation systems connected in a network, in particular in industrial automation systems, such as industrial processes for manufacturing production, industrial processes for power generation, infrastructures for distribution of fluids (water, oil and gas), infrastructures for the generation and/or transmission of electric power, infrastructures for transport management. Moreover, it finds useful application with all the technology environments, including Information Technology (IT), Operation Technology (OT) and Internet of Things (IoT).

The term *"network protocol"* means, in the present invention, a system of rules between entities on a network, describing how the bytes composing the message to exchange should be structured for the entities to understand each other. Noteworthy examples of network protocols are TCP/IP, Modbus, BACnet.

The term *"packet"* means, in the present invention, a finite sequence of bytes that represents a message exchanged between the entities on a network, in particular between two nodes. Each protocol defines a particular structure for the set of valid packets that could be exchanged, and it defines the rules that govern a sensible communication.

The term *"node"* means, in the present invention, a device in the network that can receive and/or transmit data through a connection, being it based on a cable or a radio signal. A node is identified with a unique identifier, which could be for instance a MAC address or an IP address.

The term *"link"* means, in the present invention, a physical or radio connection between two nodes of the network that allow the transmission of packets in both directions.

The term *"edge"* means, in the present invention, a direct communication of nodes *n*₁ and *n*₂ in the network via protocol p, which could have for instance a notation (*n*₁*,* p, *n*₂). There might be several edges between two nodes, one per each communication protocol used.

The term *"network topology graph"* means, in the present invention, an abstraction of the structure of a network, and it can be represented as a Labelled Graph *G*(*N, E, P),* where *N* is the set of nodes, and *E* is the set of edges, P is the set of protocols such that each edge is a tuple (*n*₁*, p, n*₂) where *n*₁*, n*₂ ∈ *N, n*₁ ≠ *n*₂, *p* ∈ *P*. The edges define the nodes that are connected, and the edge is interpreted as having a direction, i.e., in (*x, y*) *x* is the source node and y is the destination node. A labelled directed graph is a graph *G* = (*N, E, L*) where *L* is a set of labels and *E* = {(*x, y, l*) | (*x, y, l*) ∈ *N* × *N* × *L*}*.* Essentially each edge in the graph is decorated with a label in *L*.

The term *"deep packet inspection"* or *"DPI"* means, in the present invention, a technique that consists in listening to the network traffic (sniffing) and inspecting the captured packets to derive properties of the network. For instance, the information about the source and the destination of a sufficiently large number of packets may be exploited to build the network topology graph.

The term *"formal model"* or *"formal method"* means, in the present invention, a set of techniques that approach the solution of a problem by recasting it into an equivalent one but expressed in a formal language, or *"formal model",* for instance a set of mathematical or logical expressions. These expressions can then be solved by an automated tool, and the solution can be translated back into a solution in the original problem. One of the most prominent techniques is Model Checking, where the problem is translated into a finite state automaton. Model Checking is successfully employed in industrial settings for determining the safety of hardware and software by a model checker.

The term *"model checking"* means, in the present invention, a technique in Formal Methods, where the problem at hand is translated into a finite state automaton and then analyzed with automated search techniques. Model Checking is successfully employed in several industrial settings for determining the safety of hardware and software. SMT Model Checking refers to the use of SMT-solvers as backends for implementing a model checker. An example of SMT Model Checker is the tool Intrepid.

The term *"PLC"* means, in the present invention, a Programmable Logic Controller (PLC) which is an industrial computer system that continuously monitors the state of input devices and makes decisions based on a custom program to control the state of output devices. PLCs are widely used in industrial control systems (ICS) for handling sensors and actuators, mainly because of their robust nature and ability to withstand harsh conditions including severe heat, cold, dust, and extreme moisture.

The term *"IEC-61131-3*" means, in the present invention, an international standard for PLCs. The part 3 of the standard defines the characteristics of the programming languages that should be used to program a PLC. It defines two textual languages, Structured Text (ST) and Instruction List (IL), and three graphical languages Function Block Diagram (FBD), Ladder Diagram (LD), and Sequential Function Chart (SFC). The languages, despite being quite different in syntax, are all equivalent from a semantical point of view (they can write the same set of programs). The standard is essentially implemented by all the major vendors, even though each proposes its custom environment for developing programs and operating with the PLCs.

The term *"Rockwell's L5X file format"* means, in the present invention, a file format from Rockwell Automation which is one of the major PLC vendors.

The term *"PLC Bomb"* or *"Ladder Bomb"* means, in the present invention, to a PLC program written in Ladder Diagram whose goal is to cause harm to the PLC or the machinery it controls and it includes malicious programs written in any of the other languages defined by the IEC-61131-3 standard.

The term *"Engineering Station"* means, in the present invention, a computer that runs a software that can be used to program a PLC or run other configuration and diagnostic tools. The program for the PLC is written and saved locally on the Engineering Station and eventually it is uploaded to the internal memory of the PLC using a network connection.

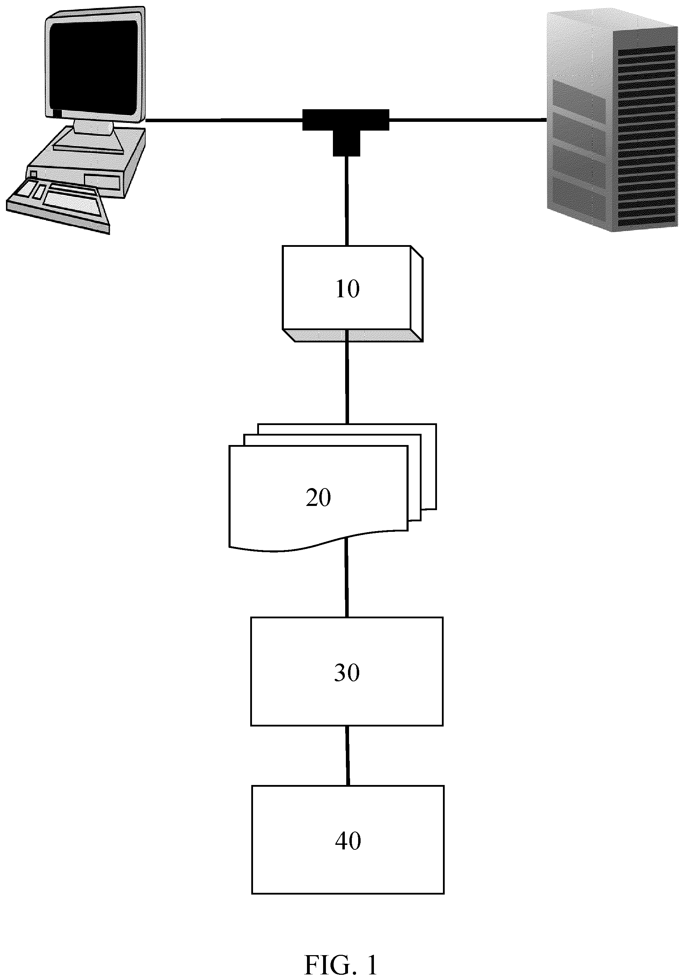

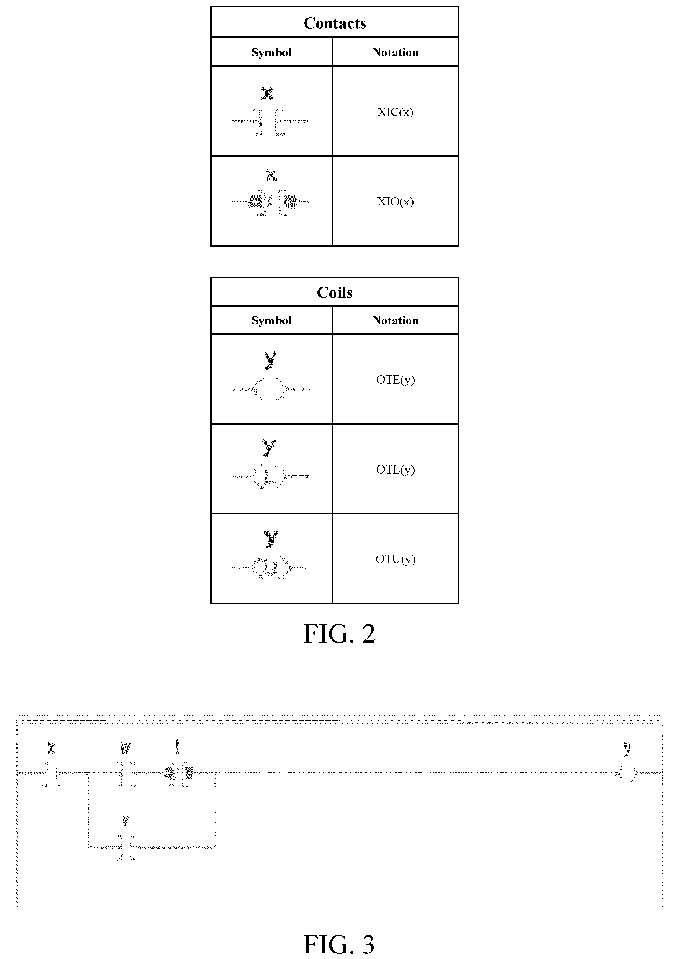

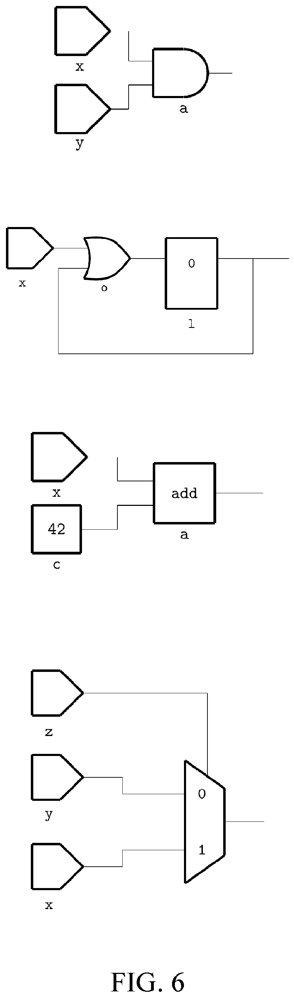

The method for automatic method for automatic translation of ladder logic to a SMT-based model checker in a network according to the present invention is herewith described with reference to figures Figure 1, which shows a block diagram according to an embodiment of the present invention. Figures 2-5 show examples blocks of symbols in a Ladder Diagram (or Ladder Logic) and their combination, while Figure 6 shows a block of schematic circuit representations in an Intrepid Model.

A Ladder Diagram is a graphical representation language for PLC programs that resembles electromechanical relay systems, describing a program in terms of the power flow. The name is based on the observation that programs in this language resemble ladders, with two vertical rails and a series of horizontal rungs between them, therefore power rails are connected by horizontal lines, that remind the rungs of a ladder. Each rung is to be interpreted as an instruction of the program. Multiple rungs are executed in order, from the top to the bottom, unless otherwise specified by the user by means of specific instructions.

Ladder Diagrams as specified by the IEC-61131-3 standard do not come with a specific input language, rather they are described in terms of visual diagrams. A Ladder Diagram is bounded by two power rails, on the left and on the right, depicted as vertical lines. The left rail is assumed to be connected to +5 Vcc, or to hold the logical state 1, while the right rail can be understood as being connected to the ground, or to hold logical state 0.

A rung can be programmed by means of connections, contacts, coils, calls to functions, function blocks and control flow statements. The language therefore can be seen as a set of connections between logical checkers, called contacts, and actuators, called coils. If a path can be traced between the left side of the rung and the output, through asserted contacts, the rung is true and the output coil storage bit is asserted 1 or true. If no path can be traced, then the output is false 0 and the coil by analogy to electromechanical relays is considered de-energized. Each rung of ladder language typically has one coil at the far right. Some manufacturers may allow more than one output coil on a rung.

In the present application we focus on Rockwell's Ladder Logic programs, in particular, with reference to L5X file format, but all consideration may be adapted to any Ladder Logic program in particular for those complying with the IEC-61131-3 standard.

The set of data types of the program that are supported by Rockwell's PLCs comprises the data types 1-bit Boolean, 8-bits signed integers, 16-bits signed integers, 32-bits signed integers, 64-bits signed integers, 8-bits unsigned, 16-bits unsigned integers, 32-bits unsigned integers, 64-bits unsigned integers, 32-bits single-precision floating point, 64-bits double-precision floating point and a variable-size array of 8-bits signed integers. The notation of each data type follows the scheme below:
BOOL: 1 bit
SINT: 8 bits signed integers
INT: 16 bits signed integers
DINT: 32 bits signed integers
LINT: 64 bits signed integers
USINT: 8 bits unsigned integers
UINT: 16 bits unsigned integers
UDINT: 32 bits unsigned integers
ULINT: 64 bits unsigned integers
REAL: 32 bits single-precision floating point
LREAL: 64 bits double-precision floating point
STRING: variable-size array of SINT, each representing an ASCII character

Each PLC comes with a particular set of inputs and outputs, that may vary in name, number, and data type. Local variables can be defined by the user and are subjected to the PLC's available memory.

Connections are horizontal or vertical lines that can be used to propagate the signals in a rung. A simple horizontal connection propagates the signal on the left to the right. A vertical connection can be used to split the signal in two or more sub-rungs, and to rejoin them before reaching the right power line. Every element of the ladder diagram is attached to a rung by means of a connection.

Contacts, as input of a rung, may refer to physical inputs to the programmable controller from physical devices such as pushbuttons and limit switches via an integrated or external input module, or may represent the status of internal storage bits which may be generated elsewhere in the program. In the Ladder Program, Contacts, or checkers, are part of the rung input defined by switches that can block or allow the flow of the current in a connection, in particular they make or break circuits to control coils. A contact is controlled by a BOOL input or variable. Figure 2 shows a block of symbols relating to Contacts in a Ladder Diagram grouped in the related table. In particular, with the notation XIC(x) is indicated the contact symbol relating to the examination if the contact is closed, while with the notation XIO(x) is indicated the contact symbol relating to the examination if the contact is open. Therefore, XIC(x) propagates 1 if and only if the value on the left is 1 and x is 1, while XIO(x) propagates 1 if and only if the value on the left is 1 and x is 0.

Coils, as output of a rung, may represent physical outputs which operate some devices connected to the programmable controller, or may represent internal storage bits for use elsewhere in the program, and are assignments to BOOL variables. Figure 2 shows a block of symbols relating to Coils in a Ladder Diagram grouped in the related table. In particular, with the notation OTE(y) is indicated the coil symbol relating to the output energize, with the notation OTL(y) is indicated the coil symbol relating to the output latch, while with the notation OTU(y) is indicated the coil symbol relating to the output unlatch. Therefore, OTE(y) assigns 1 to y if the value on the left is 1 otherwise assigns 0, OTL(y) assigns 1 to y if the value on the left is 1 otherwise leave unchanged, while OTU(y) assigns 0 to y if the value on the left is 1 otherwise leave unchanged.

Each contact or coil corresponds to the status of a single bit in the programmable controller's memory. Unlike electromechanical relays, a ladder program can refer any number of times to the status of a single bit, equivalent to a relay with an indefinitely large number of contacts. Using connections, contacts, and coils it is possible to create arbitrarily complex state machines that can be used to energize other blocks. In this regard, Figure 3 shows a Ladder diagram with combination of Connections and Contacts that store a value in a Coil. The corresponding Rockwell notation for the aforementioned diagram is XIC(x)[XIC(w)XIO(t),XIC(v)]OTE(y), which can be interpreted as the Boolean assignment *y* := *x* ∧ ((*w* Λ ¬*t*) ∨ *v.*

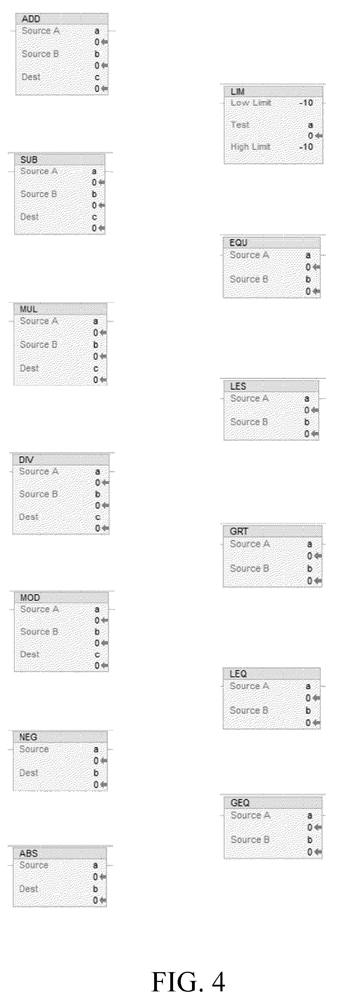

Functions (standard or user-defined) may operate on all the available data types. The input connection from the left specifies whether the intended operation must be executed or not. The output connection to the right might be either a propagation of the value of the input connection (e.g., for adders, subtractors, ...) or it holds the BOOL result of an operation between two values. Figure 4 shows a block of symbols relating to Functions, which are comparators and arithmetic operators of the program, in a Ladder Diagram, as considered in the present application. In particular, with the notation ADD(a,b,c) is indicated the function relating to the Addition, with the notation SUB(a,b,c) is indicated the function relating to the Subtraction, with the notation MUL(a,b,c) is indicate the function relating to Multiplication, with the notation DIV(a,b,c) is indicated the function relating to Division, with the notation MOD(a,b,c) is indicated the function relating to Modulo, with the notation NEG(a,b) is indicated the function relating to Negate, with the notation ABS(a,b) is indicated the function relating to Absolute Value, with the notation LIM(-10,a,10) is indicated the function relating to Limit, with the notation EQU(a,b) is indicated the function relating to Equal to, with the notation LES(a,b) is indicated the function relating to Less than, with the notation GRT(a,b) is indicated the function relating to Greater than, with the notation LEQ(a,b) is indicated the function relating to Less than or equal to, while with the notation GEQ(a,b) is indicated the function relating to Greater than or equal to. Therefore, ADD(a,b,c) defines c := a + b if the value on the left is 1, the value on the right being the same as the value on the left, SUB(a,b,c) defines c := a - b if the value on the left is 1, the value on the right being the same as the value on the left, MUL(a,b,c) defines c := a * b if the value on the left is 1, the value on the right being the same as the value on the left, DIV(a,b,c) defines c := a / b if the value on the left is 1, the value on the right being the same as the value on the left, MOD(a,b,c) defines c := a % b if the value on the left is 1, the value on the right being the same as the value on the left, NEG(a,b) defines b := -a if the value on the left is 1, the value on the right being the same as the value on the left, ABS(a,b) defines b := |a| if the value on the left is 1, the value on the right being the same as the value on the left, LIM(-10,a,10) assigns 1 to the value on the right if the value on the left is 1 and -10 ≤ *a* ≤ 10 holds, assign 0 otherwise, EQU(a.b) assigns 1 to the value on the right if the value on the left is 1 and *a* = b holds, assign 0 otherwise, LES(a,b) assigns 1 to the value on the right if the value on the left is 1 and *a* < b holds, assign 0 otherwise, GRT(a,b) assigns 1 to the value on the right if the value on the left is 1 and *a > b* holds, assign 0 otherwise, LEQ(a,b) assigns 1 to the value on the right if the value on the left is 1 and *a* ≤ *b* holds, assign 0 otherwise, while GEQ(a,b) assigns 1 to the value on the right if the value on the left is 1 and *a* ≥ *b* holds, assign 0 otherwise.

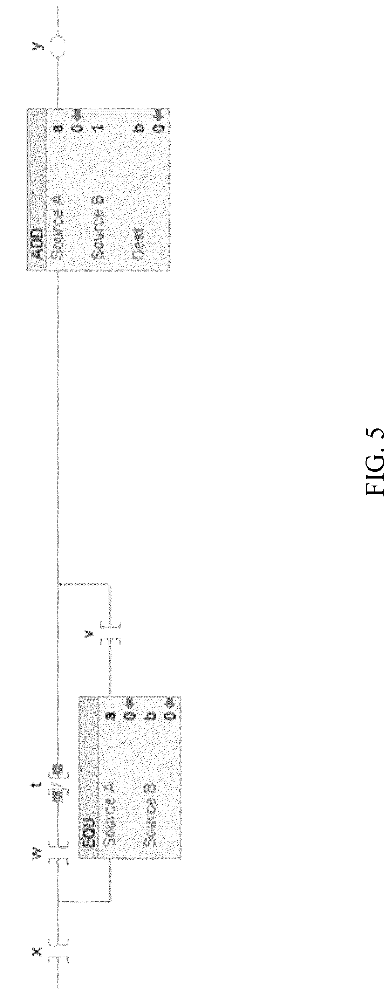

In this regard, Figure 5 shows the diagram of Figure 3 enriched with some standard Functions of Figure 4, as above described. The corresponding Rockwell notation for the diagram is XIC(x)[XIC(w)XIO(t),EQU(a,b)XIC(v)]ADD(a, 1,b)OTE(y), which can be interpreted as the Boolean assignment *y* :*= x* ∧ ((*w* ∧ ¬*t*) ∨ ((*a* = *b)* ∧ *v*)*.* Also, the ADD function is executed only when the precondition *x* ∧ ((*w* ∧ ¬*t*) V ((*a = b*) ∧ *v*) holds true.

With regard to function blocks and control flow statements in the present application they will not be considered for modelling, but they can be covered in further embodiments according to the present invention even if not herewith described.

In the present application a method to translates a Ladder program into a circuit-like formal machine like the one used by the Intrepid model checker is described. Once the Ladder program is translated into such language it is possible to automatically analyze the program in seek of desired properties (e.g., that a certain condition that triggers a bad behavior can never hold true). The present invention can be preferably used on industrial computer networks consisting of many connected nodes, and, most notably, contains Engineering Stations and PLCs. The Engineering Stations execute a "Program Upload" action from time to time, with the goal of updating the program of the connected PLCs. The other portion of the network is irrelevant as far as this invention is concerned, and it can contain a larger number of other nodes, sensors, and actuators. The present invention may also be applied to any other device that may be loaded with a program from another computer and that are not commonly categorized as PLCs (e.g., smart devices, IoT devices, general-purpose micro-computers such as Raspberry Pis).

According to the present invention is described, therefore, a method for automatic translation of ladder logic to a SMT-based model checker in a network.

The method for automatic translation of ladder logic to a SMT-based model checker in a network comprises:
- defining the topology of the network as an enriched network topology based on packets exchanged in the network;
- extracting a program from the packets relating to a PLC in the network and identifying inputs, outputs, variables and a ladder diagram of the PLC;
- translating the inputs, outputs, variables and ladder diagram into a predefined formal model.

The method therefore comprises defining the topology of the network as an enriched network topology based on packets exchanged in the network, as illustrated in the block 10 of Figure 1. The computer network is augmented with a sniffing device that can perform Deep Packet Inspection.

Afterwards, the method comprises extracting a program from the packets relating to a PLC in the network and identifying inputs, outputs, variables and a ladder diagram of the PLC, as illustrated in the block 20 of Figure 1. It is assumed that a procedure is in place that can extract the program from the packets that transit from the Engineering Stations and the PLCs. The complexity of extracting a program from the traffic may range from the "very easy" to the "essentially impossible": there are vendors that transmit the source code of the program in clear text, others that transmit the program encrypted, others that do not transmit the source code at all, others only send the compiled binary code. As far as this application is concerned, we assume that we are in the scenario where when the source code is not available a sufficiently powerful reverse engineering procedure is in place that allows for the retrieval and reconstruction of the PLC program.

Finally, the method comprises translating the inputs, outputs, variables and ladder diagram into a predefined formal model, as illustrated in the block 30 of Figure 1 The obtained PLC program is parsed, and it is translated into a predefined formal model, wherein the predefined formal model is a circuit-like SMT-based model checker.

Once the translation has been performed a user may query 40 the SMT-based model checker to figure out the conditions for the reachability of a particular condition of the program. For example, the user may query the checker for the condition that would trigger a subroutine calling itself, or an out-of-bound access to an array.

A preferred SMT-based Model Checker is the Intrepid Model, to which the embodiment of the present application is based. Intrepid is a freely available SMT Model Checker that comes in the form of a python library. The input models for Intrepid are essentially python scripts that use the tool's APIs.

Such a circuit-like SMT-based model checker defines a circuit with a global clock that divides the execution into discrete time steps.

The circuit-like SMT-based model checker comprises:
- model inputs as basic signals of any supported type that get a new value at every time step;
- model output latches and model variable latches as basic memory elements that can hold a value of a supported type;
- Boolean gates;
- predefined model functions as comparators and arithmetic operators;
- constants as signal values of any supported type that never change value at every of said time steps.

The translating 30 comprises translating the set of data types of the program according to a predefined model set of data types of the circuit-like SMT-based model checker. The predefined model set of data types comprises the data types 1-bit Boolean, 8-bits signed integers, 16-bits signed integers, 32-bits signed integers, 64-bits signed integers, 8-bits unsigned integers, 16-bits unsigned integers, 32-bits unsigned integers, 64-bits unsigned integers, 32-bits single-precision floating point and 64-bits double-precision floating point.

According to the Rockwell L5X file format and the set of data types already described, in translating the set of data types of the program according to a predefined model set of data types of the circuit-like SMT-based model checker the predefined model set of data types is matched with the corresponding set of data types by removing the data type of variable-size array of 8-bits signed integers. According to the notation of the set of data types of the program already described, the predefined model set of data types is matched with the corresponding set of data types having the notation Boolean for the 1-bit Boolean, int8 for the 8-bits signed integers, int16 for the 16-bits signed integers, int32 for the 32-bits signed integers, int64 for the 64-bits signed integers, usint8 for the 8-bits unsigned integers, uint16 for the 16-bits unsigned integers, uint32 for the 32-bits unsigned integers, uint64 for the 64-bits unsigned integers, float32 for the 32-bits single-precision floating point and float64 for the 64-bits double-precision floating point.

The translating 30 further comprises translating the inputs of the PLC as model inputs of the circuit-like SMT-based model checker of the same type. With regard to the Intrepid model checker language inputs are basic signals of any supported type. If the execution of the model checker is divided into discrete time steps, at every time step the input is assumed to get a new value.

The translating 30 comprises translating the outputs of the PLC as model output latches of the circuit-like SMT-based model checker of the same type. Moreover, translating 30 comprises translating the variables of the PLC as model variable latches of the circuit-like SMT-based model checker of the same type. With regard to the Intrepid model checker language latches are memory elements that can hold a value of a supported type. Preferably, the model output latches and model variable latches store an initial value and a next state function they hold when the circuit is booted at first time step. If the execution of the model checker is divided into discrete time steps, the model output latches and model variable latches are updated with a new value at each subsequent time step by the value expressed by the next state function.

The Intrepid model checker language comprises constants, which are signal values of any supported type that never change, arithmetic and comparison elements and Boolean gates, which found useful application in the translation of the further elements as below described in greater detail.

In fact, translating 30 may comprise translating the comparators and arithmetic operators of the ladder diagram into a plurality of predefined model functions of the circuit-like SMT-based model checker. In the embodiment herewith described, the predefined model functions comprise the functions Addition, Subtraction, Multiplication, Division, Modulo, Negate, Absolute value, Limit, Equal to, Less than, Greater than, Less than or equal to and Greater than or equal to. In this regard, Figure 4 shows a block of symbols relating to Functions in a Ladder Diagram.

According to the Rockwell L5X file format and the comparators and arithmetic operators of the program already described, the predefined model functions are matched with the corresponding comparators and arithmetic operators. The below construction is followed: c = ctx.mk_add(a, b) for the Addition, c = ctx.mk_sub(a, b) for the Subtraction, c = ctx.mk mul(a, b) for the Multiplication, c = ctx.mk_div(a, b) for the Division, c = ctx.mk_mod(a, b) for the Modulo, b = ctx.mk_minus(a) for the Negate, b = ctx.mk_ite(ctx.mk_lt(a, ctx.mkNumber("0", it)), ctx.mk_minus(a), a) for the Absolute value, ctx.mk_and(ctx.mk_geq(a, ctx.mkNumber("-10", it)), ctx.mk _leq(a, ctx.mkNumber("10", it))) for the Limit, ctx.mk_eq(a, b) for the Equal to, ctx.mk_lt(a, b) for the Less than, ctx.mk_gt(a, b) for the Greater than, ctx.mk_leq(a, b) for the Less than or equal to and ctx.mk_geq(a, b) for the Greater than or equal to.

In particular, according to the notation of the comparators and arithmetic operators of the program already described, the predefined model functions are matched with the corresponding comparators and arithmetic operators having the notation ADD(a,b,c) for the Addition, SUB(a,b,c)for the Subtraction, MUL(a,b,c) for the Multiplication, DIV(a,b,c) for the Division, MOD(a,b,c) for the Modulo, Neg(a,b) for the Negate, ABS(a,b) for the Absolute value, LIM(-10,a,10) for the Limit, EQU(a,b) for the Equal to, LES(a,b) for the Less than, GRT(a,b) for the Greater than, LEQ(a,b) for the Less than or equal to and GEQ(a,b) for the Greater than or equal to.

Finally, translating 30 may comprises translating contacts and coils of the ladder diagram according to predefined model recursive procedures relating to the predefined model set of data types, the model inputs, the model output latches, the model variable latches and the plurality of predefined model functions, wherein the contacts are switches that can block or allow the flow of the current in a connection and each of the contacts is controlled by a Boolean input or variable, and wherein the coils are assignments to Boolean variables.

In an embodiment, the predefined model recursive procedures comprise a first contacts translating procedure and a second contacts translating procedure which allow to translate contacts and a first coils translating procedure, a second coils translating procedure and a third coils translating procedure which allow to translate coils. The first contacts translating procedure returns the model input or the currently stored of the model output latch or model variable latch and the second contacts translating procedure returns the negate of the model input or the negate currently stored of the model output latch or model variable latch, and wherein the first coils translating procedure assigns the value received from the left connection, the second coils translating procedure sets the latch value to true if the left connection holds true otherwise preserves the previous value and the third coils translating procedure sets the latch value to false if the left connection holds false otherwise preserves the previous value.

According to the Rockwell L5X file format and the contacts and coils of the ladder diagram, as illustrated in Figures 2 and 3, the contacts of the program comprise the notation XIC(x) to examine if the switch is closed, which propagates 1 only if the value on the left is 1 and x is 1, and XIO(x) to examine if the switch is open, which propagates 1 only if the value on the left is 1 and x is 0. The first contacts translating procedure matches with the notation XIC(x) following the construction

```
                   Procedure TranslateXIC(element)
                    if element "is not input":
                     element = var2current[element]
                    return element,
                    
```

The second contacts translating procedure matches with the notation XIO(x) following the construction

```
                   Procedure TranslateXIO(element)
                    if element "is not input":
                     element = var2current[element]
                    return ctx.mk_not(element), and
```

The coils of the program comprise the notation OTE(y) to energy output, which assigns 1 to y if the value on the left is 1 otherwise 0, OTL(y) to latch output, which assigns 1 to y if the value on the left is 1 otherwise leave unchanged, and OTU(y) to unlatch output, which assigns 0 to y if the value on the left is 1 otherwise leave unchanged,
The first coils translating procedure matches with the notation OTE(y) following the construction

```
            Procedure TranslateOTE(element)
             var2current[element] = element2precondition[element]
             return var2current[element]
```

The second coils translating procedure matches with the notation OTL(y) following the construction

```
            Procedure TranslateOTL(element)
             var2current[element] = ctx.mk_or(var2current[element],
            element2precondition[element])
             return var2current[element], and
```

The third coils translating procedure matches with the notation OTU(y) following the construction

```
            Procedure TranslateOTU(element)
             var2current[element] =
            ctx.mk_and(ctx.mk_not(element2precondition[element]),
                             var2current[element])
             return var2current[element].
```

Figure 6 shows a block of schematic circuit representations in an Intrepid Model. The first representation relates to an AND of two inputs, wherein the Intrepid model is written as:
ctx = Context()
bt = ctx.mk_boolean_type()
x = ctx.mk_input("x", bt)
y = ctx.mk_input("y", bt)
a = ctx.mk_and(x, y)

The second representation relates to a latch, initialized at 0 and receiving the OR of its previous value and an input, wherein the Intrepid model is written as:
ctx = Context()
bt = ctx.mk_boolean_type()
x = ctx.mk_input("x", bt)
1 = ctx.mk_latch("1", bt)
o = ctx.mk_or(x, 1)
ctx.set_latch_init_next(1,
   ctx.mk_false(),
   o)

The third representation relates to an addition of an input by a constant value, wherein the Intrepid model is written as:
ctx = Context()
it = ctx.mk_int32_type()
x = ctx.mk_input("x", it)
c = ctx.mk_number("42", it)
a = ctx.mk_add(x, c)

The fourth representation relates to an if-then-else, wherein the Intrepid model is written as:
ctx = Context()
it = ctx.mk_int32_type()
bt = ctx.mk_boolean_type()
x = ctx.mk_input("x", it)
y = ctx.mk_input("y", it)
z = ctx.mk_input("z", bt)
i = ctx.mk_ite(z, x, y)

The translation of a network from the Rockwell notation to Intrepid can be better understood with an embodiment of the predefined model recursive procedures from the table below reported, described in greater details as follows, according to an embodiment of the present invention.

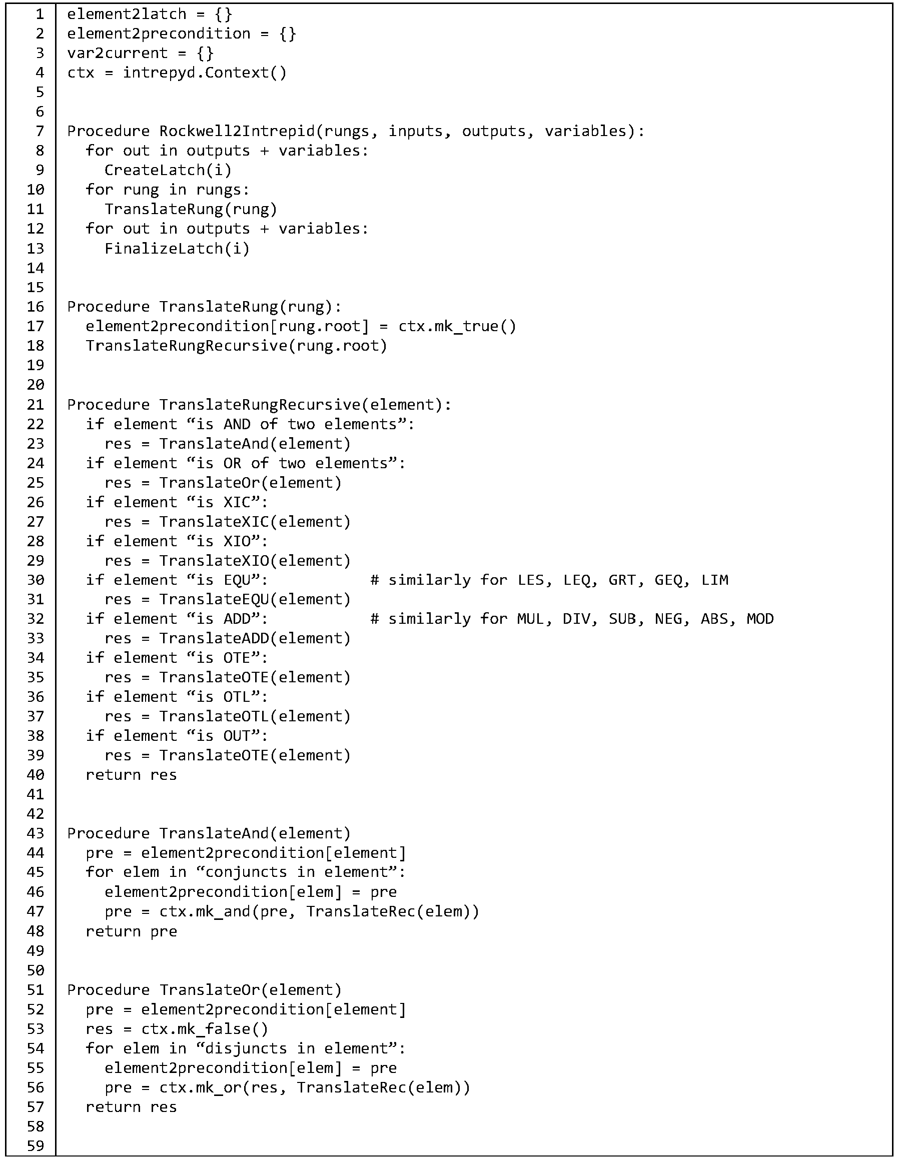

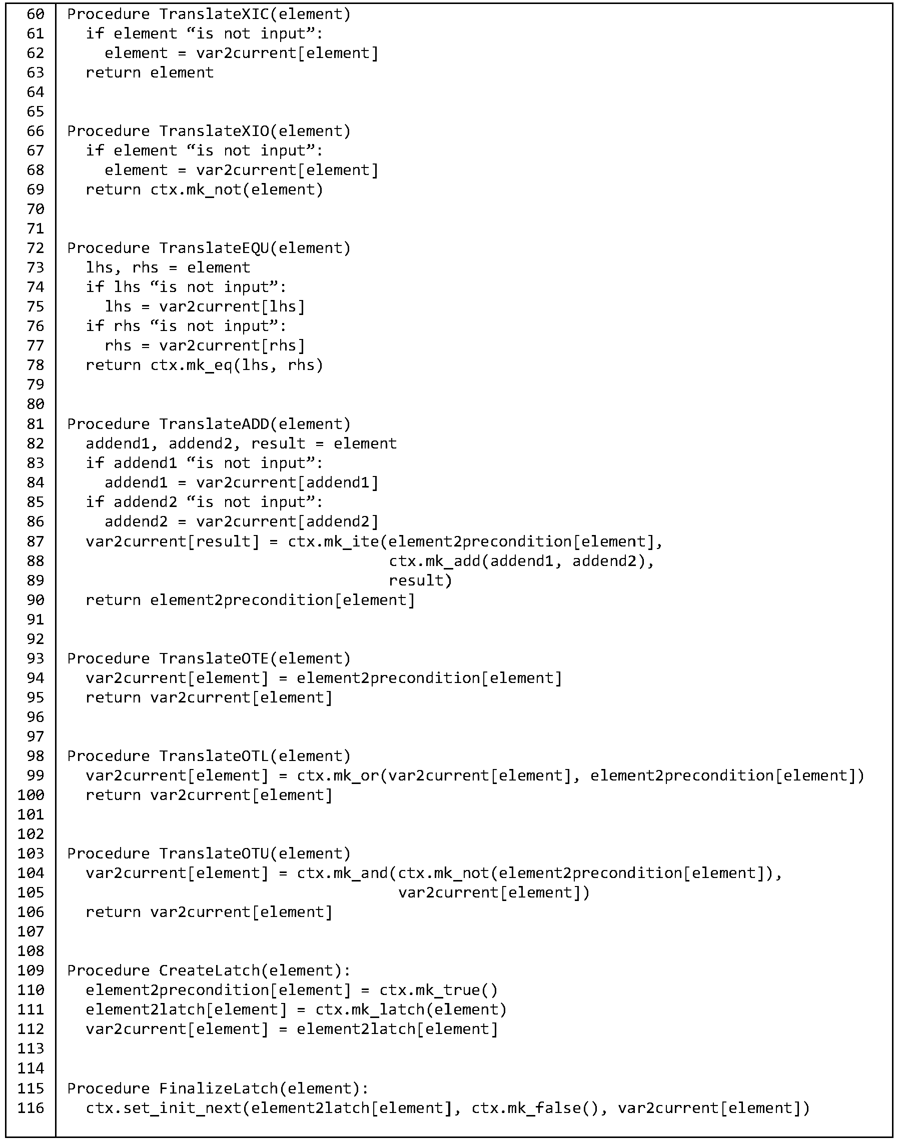

The predefined model recursive procedures comprise an initialization procedure which uses three helper dictionaries, as illustrated in lines 1-3 of the aforementioned table, wherein:
- *element2precondition,* it maps each element on a ladder diagram (contacts, coils, functions) to the Boolean condition that it receives from the left. This is basically the condition under which the block gets executed;
- *var2current,* it stores intermediate assignments for the variables, local or outputs;
- *element2latch,* it maps ladder variables to Intrepid's latches.
An Intrepid context is also created that allows the creation of the translated elements, as in line 4.

The predefined model recursive procedures comprise a translation of a routine procedure which performs the translation of a routine. It takes as input the rungs of the ladder diagram in Rockwell's notation, and the sets of inputs, outputs, and local variables from the L5X file, as illustrated in lines 7-13 of the aforementioned table. Firstly, it creates a latch for each output and variable, lines 8-9. Then it calls procedure *TranslateRung* to translate each rung of the ladder diagram, lines 10-11. Finally, it finalizes the latches, lines 12-13.

The predefined model recursive procedures comprise a translation of a rung procedure which translates a rung in Rockwell's notation into the corresponding Intrepid model, as illustrated in lines 16-18 of the aforementioned table. The leftmost element of the rung, *rung.root,* has precondition "true", since it is directly attached to the left power rail, line 17. The translation is then handled by a call to procedure *TranslateRungRecursive,* line 18. Procedure *TranslateRungRecursive,* lines 21-40, dispatches the translation to helper functions (that may call *TranslateRungRecursive* again). Procedure *TranslateAnd,* lines 43-48, implements the translation of elements that are placed on the same connection and are therefore to be interpreted as a logical conjunction. The main loop, lines 45-47, iterates through the conjuncts, and it updates their preconditions (the precondition of an element "y" on the right of an element "x" will be influenced by the truth value of "x"). Similarly, *TranslateOr,* lines 51-57, takes care of translating elements that are attached with vertical connections, that are to be interpreted as logical disjunctions.

The first contact translating procedure *TranslateXIC,* illustrates in lines 60-63, and the second contact translating procedure *TranslateXIO,* illustrated in lines 66-69, take care of translating contacts. They simply return inputs (negate inputs respectively) or the currently stored symbolic value of a variable or output (negated value respectively).

Procedure *TranslateEQU,* lines 72-78, takes care of translating equality between two elements, each being either an input or the current stored symbolic value for variables and outputs. Similar functions can be implemented for LES, LEQ, GRT, GEQ, LIM with a minor modification of the instruction at line 78, by taking the right translation shown in previous sections. Because these functions return a Boolean value, they interfere with the preconditions of the elements that are on their right on a connection.

Procedure *TranslateADD,* lines 81-90, takes care of translating an addition between two elements, placing the result in a third. Notice the use of the mk_ite construct to decide the current value of the third variable: essentially the operation is executed only if the precondition for the block holds true, otherwise the value of the variable is left unchanged. Similar functions can be implemented for SUB, NEG, MUL, DIV, MOD, ABS with a minor modification of the instruction at line 90. The operation does not influence the precondition of the elements that are on its right on a connection.

The first coils translating procedure *TranslateOTE,* as in lines 93-95, the second coils translating procedure *TranslateOTL,* as in lines 98-100, and the third coils translating procedure *TranslateOTU,* as in lines 103-106, take care of translating the coils. *TranslateOTE* simply assigns the value received from the left connection, *TranslateOTL* sets the latch value to true if the left connection holds true, otherwise preserves the previous value, and *TranslateOTU* sets the latch value to false if the left connection holds false, otherwise preserves the previous value.

## Claims

1. A method for automatic translation of ladder logic to a Satisfiability Modulo Theories-based model checker in a network comprising:
- defining (10) the topology of said network as an enriched network topology-based on packets exchanged in said network by a deep packet inspection that consists in listening to the network traffic and inspecting the captured packets to derive properties of the network;
- extracting (20) by an extraction procedure a program from said packets relating to a PLC in said network and identifying inputs, outputs, variables and a ladder diagram of said PLC; wherein said extraction procedure performs a reverse engineering procedure to retrieve and reconstruct said program;
- translating (30) said inputs, outputs, variables and ladder diagram into a predefined formal model;
wherein said predefined formal model is a circuit-like Satisfiability Modulo Theories-based model checker; wherein said circuit-like Satisfiability Modulo Theories-based model checker:
defines a circuit with a global clock that divides the execution into discrete time steps;
comprises:
- model inputs as basic signals of supported types that get a new value at every time step;
- model output latches and model variable latches as basic memory elements that can hold a value of a supported type;
- Boolean gates;
- predefined model functions as comparators and arithmetic operators;
- constants as signal values of supported types that never change value at every of said time steps. ; and
wherein said translating (30) comprises:
- translating the set of data types of said program according to a predefined model set of data types of said circuit-like Satisfiability Modulo Theories-based model checker;
wherein:
- said program is a Rockwell L5X file format,
- said set of data types of said program comprises the data types 1-bit Boolean, 8-bits signed integers, 16-bits signed integers, 32-bits signed integers, 64-bits signed integers, 8-bits unsigned integers, 16-bits unsigned integers, 32-bits unsigned integers, 64-bits unsigned integers, 32-bits single-precision floating point, 64-bits double-precision floating point and a variable-size array of 8-bits signed integers, and
- said predefined model set of data types comprises the data types 1-bit Boolean, 8-bits signed integers, 16-bits signed integers, 32-bits signed integers, 64-bits signed integers, 8-bits unsigned integers, 16-bits unsigned integers, 32-bits unsigned integers, 64-bits unsigned integers, 32-bits single-precision floating point and 64-bits double-precision floating point;
- said predefined model set of data types is matched with said corresponding set of data types by removing said data type of variable-size array of 8-bits signed integers;
- translating said inputs of said PLC as corresponding model inputs of said circuit-like Satisfiability Modulo Theories-based model checker of the same type of said set of data types;
- translating said outputs of said PLC as corresponding model output latches of said circuit-like Satisfiability Modulo Theories-based model checker of the same type of said set of data types;
- translating said variables of said PLC as corresponding model variable latches of said circuit-like Satisfiability Modulo Theories-based model checker of the same type of said set of data types;
- translating comparators and arithmetic operators of said ladder diagram into a plurality of predefined model functions of said circuit-like Satisfiability Modulo Theories-based model checker;
translating contacts and coils of said ladder diagram according to predefined model recursive procedures relating to said predefined model set of data types, said model inputs, said model output latches, said model variable latches and said plurality of predefined model functions, wherein said contacts are switches that can block or allow the flow of the current in a connection and each of said contacts is controlled by a Boolean input or variable, and wherein said coils are assignments to Boolean variables.

2. The method for automatic translation of ladder logic to a Satisfiability Modulo Theories-based model checker in a network according to claim 1, wherein said set of data types of said program has the notation BOOL for said 1-bit Boolean, SINT for said 8-bits signed integers, INT for said 16-bits signed integers, DINT for said 32-bits signed integers, LINT for said 64-bits signed integers, USINT for said 8-bits unsigned integers, UINT for said 16-bits unsigned integers, UDINT for said 32-bits unsigned integers, ULINT for said 64-bits unsigned integers, REAL for said 32-bits single-precision floating point and LREAL for said 64-bits double-precision floating point, and
wherein said predefined model set of data types is matched with said corresponding set of data types having the notation Boolean for said 1-bit Boolean, int8 for said 8-bits signed integers, int16 for said 16-bits signed integers, int32 for said 32-bits signed integers, int64 for said 64-bits signed integers, usint8 for said 8-bits unsigned integers, uint16 for said 16-bits unsigned integers, uint32 for said 32-bits unsigned integers, uint64 for said 64-bits unsigned integers, float32 for said 32-bits single-precision floating point and float64 for said 64-bits double-precision floating point.

3. The method for automatic translation of ladder logic to a Satisfiability Modulo Theories-based model checker in a network according to one of claims 1-2, wherein said predefined model functions comprise the functions Addition, Subtraction, Multiplication, Division, Modulo, Negate, Absolute value, Limit, Equal to, Less than, Greater than, Less than or equal to and Greater than or equal to.

4. The method for automatic translation of ladder logic to a Satisfiability Modulo Theories-based model checker in a network according to claim 3, wherein said program is a Rockwell L5X file format,
wherein said comparators and arithmetic operators of said program have the notation ADD(a,b,c) for said Addition, SUB(a,b,c) for said Subtraction, MUL(a,b,c) for said Multiplication, DIV(a,b,c) for said Division, MOD(a,b,c) for said Modulo, NEG(a,b) for said Negate, ABS(a,b) for said Absolute value, LIM(-10,a,10) for said Limit, EQU(a,b) for said Equal to, LES(a,b) for said Less than, GRT(a,b) for said Greater than, LEQ(a,b) for said Less than or equal to and GEQ(a,b) for said Greater than or equal to, and
wherein said predefined model functions are matched with said corresponding comparators and arithmetic operators following the construction c = ctx.mk_add(a, b) for said Addition, c = ctx.mk_sub(a, b) for said Subtraction, c = ctx.mk_mul(a, b) for said Multiplication, c = ctx.mk_div(a, b) for said Division, c = ctx.mk_mod(a, b) for said Modulo, b = ctx.mk_minus(a) for said Negate, b = ctx.mk_ite(ctx.mk_lt(a, ctx.mkNumber("0", it)), ctx.mk_minus(a), a) for said Absolute value, ctx.mk_and(ctx.mk_geq(a, ctx.mkNumber("-10", it)), ctx.mk_leq(a, ctx.mkNumber("10", it))) for said Limit, ctx.mk_eq(a, b) for said Equal to, ctx.mk_lt(a, b) for said Less than, ctx.mk_gt(a, b) for said Greater than, ctx.mk_leq(a, b) for said Less than or equal to and ctx.mk_geq(a, b) for said Greater than or equal to.

5. The method for automatic translation of ladder logic to a Satisfiability Modulo Theories-based model checker in a network according to one of claims 1-4, wherein said predefined model recursive procedures comprise a first contacts translating procedure and a second contacts translating procedure which allow to translate contacts and a first coils translating procedure, a second coils translating procedure and a third coils translating procedure which allow to translate coils,
wherein said first contacts translating procedure returns said model input or the currently stored of said model output latch or model variable latch and said second contacts translating procedure returns the negate of said model input or the negate currently stored of said model output latch or model variable latch, and
wherein said first coils translating procedure assigns the value received from the left connection, said second coils translating procedure sets the latch value to true if the left connection holds true, otherwise preserves the previous value and said third coils translating procedure sets the latch value to false if the left connection holds false, otherwise preserves the previous value.

6. The method for automatic translation of ladder logic to a Satisfiability Modulo Theories-based model checker in a network according to claim 5, wherein said program is a Rockwell L5X file format,
wherein said contacts of said program comprise the notation XIC(x) to examine if said switch is closed, which propagates 1 only if the value on the left is 1 and x is 1, and XIO(x) to examine if said switch is open, which propagates 1 only if the value on the left is 1 and x is 0,
wherein said first contacts translating procedure matches with said notation XIC(x) following the construction
```
Procedure TranslateXIC(element)
if element "is not input":
element = var2current[element]
return element,
```
wherein said second contacts translating procedure matches with said notation XIO(x) following the construction
```
Procedure TranslateXIO(element)
if element "is not input":
element = var2current[element]
return ctx.mk_not(element), and
```
wherein said coils of said program comprise the notation OTE(y) to energy output, which assigns 1 to y if the value on the left is 1 otherwise 0, OTL(y) to latch output, which assigns 1 to y if the value on the left is 1 otherwise leave unchanged, and OTU(y) to unlatch output, which assigns 0 to y if the value on the left is 1 otherwise leave unchanged,
wherein said first coils translating procedure matches with said notation OTE(y) following the construction
```
Procedure TranslateOTE(element)
var2current[element] = element2precondition[element]
return var2current[element]
```
wherein said second coils translating procedure matches with said notation OTL(y) following the construction
```
Procedure TranslateOTL(element)
var2current[element] = ctx.mk_or(var2current[element],
element2precondition[element])
return var2current[element], and
```
wherein said third coils translating procedure matches with said notation OTU(y) following the construction
```
Procedure TranslateOTU(element)
var2current[element] =
ctx.mk_and(ctx.mk_not(element2precondition[element]),
var2current[element])
return var2current[element].
```

7. The method for automatic translation of ladder logic to a Satisfiability Modulo Theories-based model checker in a network according to claim 1, wherein said model output latches and model variable latches store an initial value and a next state function they hold when said circuit is booted at first time step.

8. The method for automatic translation of ladder logic to a Satisfiability Modulo Theories-based model checker in a network according to claim 7, wherein said model output latches and model variable latches are updated with a new value at each subsequent time step by the value expressed by said next state function.

## Patentansprüche

1. Verfahren zur automatischen Übersetzung von Kontaktplanlogik in einen Satisfiability-Modulo-Theories-basierten Model-Checker in einem Netzwerk, umfassend:
- Definieren (10) der Topologie des Netzwerks als eine angereicherte Netzwerktopologie basierend auf Paketen, die in dem Netzwerk durch tiefe Paketinspektion ausgetauscht werden, die im Abhören des Netzwerkverkehrs und Prüfen der erfassten Pakete besteht, um Eigenschaften des Netzwerks abzuleiten;
- Extrahieren (20) eines Programms aus den Paketen bezüglich einer SPS in dem Netzwerk durch ein Extraktionsverfahren und Identifizieren von Eingängen, Ausgängen, Variablen und einem Kontaktdiagramm der SPS; wobei das Extraktionsverfahren ein Verfahren zur Umkehrentwicklung ausführt, um das Programm abzurufen und zu rekonstruieren;
- Übersetzen (30) der Eingänge, Ausgänge, Variablen und des Kontaktdiagramms in ein vordefiniertes formales Modell;
wobei das vordefinierte formale Modell ein schaltungsähnlicher Satisfiability-Modulo-Theories-basierter Model-Checker ist; wobei der schaltungsähnliche Satisfiability-Modulo-Theories-basierte Model-Checker:
eine Schaltung mit einem globalen Takt definiert, der die Ausführung in diskrete Zeitschritte unterteilt;
Folgendes umfasst:
- Modelleingänge als Basissignale unterstützter Typen, die bei jedem Zeitschritt einen neuen Wert erhalten;
- Modellausgangsspeicherglieder und Modellvariablenspeicherglieder als Basisspeicherelemente, die einen Wert eines unterstützten Typs halten können;
- Boolesche Gatter;
- vordefinierte Modellfunktionen als Komparatoren und arithmetische Operatoren;
- Konstanten als Signalwerte unterstützter Typen, die bei keinem der Zeitschritte ihren Wert ändern;
und
wobei das Übersetzen (30) Folgendes umfasst:
- Übersetzen der Menge von Datentypen des Programms nach einer vordefinierten Modellmenge von Datentypen des schaltungsähnlichen Satisfiability-Modulo-Theories-basierten Model-Checkers;
wobei:
- das Programm ein Rockwell-L5X-Dateiformat ist,
- wobei die Menge von Datentypen des Programms die Datentypen 1-Bit-Boolesch, vorzeichenbehaftete 8-Bit-Ganzzahlen, vorzeichenbehaftete 16-Bit-Ganzzahlen, vorzeichenbehaftete 32-Bit-Ganzzahlen, vorzeichenbehaftete 64-Bit-Ganzzahlen, vorzeichenlose 8-Bit-Ganzzahlen, vorzeichenlose 16-Bit-Ganzzahlen, vorzeichenlose 32-Bit-Ganzzahlen, vorzeichenlose 64-Bit-Ganzzahlen, 32-Bit-Gleitkommazahlen mit einfacher Genauigkeit, 64-Bit-Gleitkommazahlen mit doppelter Genauigkeit und ein Feld variabler Größe aus vorzeichenbehafteten 8-Bit-Ganzzahlen umfasst, und
- die vordefinierte Modellmenge von Datentypen die Datentypen 1-Bit-Boolesch, vorzeichenbehaftete 8-Bit-Ganzzahlen, vorzeichenbehaftete 16-Bit-Ganzzahlen, vorzeichenbehaftete 32-Bit-Ganzzahlen, vorzeichenbehaftete 64-Bit-Ganzzahlen, vorzeichenlose 8-Bit-Ganzzahlen, vorzeichenlose 16-Bit-Ganzzahlen, vorzeichenlose 32-Bit-Ganzzahlen, vorzeichenlose 64-Bit-Ganzzahlen, 32-Bit-Gleitkommazahlen mit einfacher Genauigkeit und 64-Bit-Gleitkommazahlen mit doppelter Genauigkeit umfasst;
- die vordefinierte Modellmenge von Datentypen mit der entsprechenden Menge von Datentypen durch Entfernen des Datentyps des Feldes variabler Größe aus vorzeichenbehafteten 8-Bit-Ganzzahlen abgeglichen wird;
- Übersetzen der Eingänge der SPS als entsprechende Modelleingänge des schaltungsähnlichen Satisfiability-Modulo-Theories-basierten Model-Checkers desselben Typs der Menge von Datentypen;
- Übersetzen der Ausgänge der SPS als entsprechende Modellausgangsspeicherglieder des schaltungsähnlichen Satisfiability-Modulo-Theories-basierten Model-Checkers desselben Typs der Menge von Datentypen;
- Übersetzen der Variablen der SPS als entsprechende Modellvariablenspeicherglieder des schaltungsähnlichen Satisfiability-Modulo-Theories-basierten Model-Checkers desselben Typs der Menge von Datentypen;
- Übersetzen von Komparatoren und arithmetischen Operatoren des Kontaktdiagramms in eine Vielzahl vordefinierter Modellfunktionen des schaltungsähnlichen Satisfiability-Modulo-Theories-basierten Model-Checkers;
Übersetzen von Kontakten und Spulen des Kontaktdiagramms nach vordefinierten rekursiven Modellprozeduren bezüglich der vordefinierten Modellmenge von Datentypen, den Modelleingängen, den Modellausgangsspeichergliedern, den Modellvariablenspeichergliedern und der Vielzahl vordefinierter Modellfunktionen, wobei die Kontakte Schalter sind, die den Stromfluss in einer Verbindung blockieren oder zulassen können, und jeder der Kontakte durch einen Booleschen Eingang oder eine Boolesche Variable gesteuert wird, und wobei die Spulen Zuweisungen zu Booleschen Variablen sind.

2. Verfahren zur automatischen Übersetzung von Kontaktplanlogik in einen Satisfiability-Modulo-Theories-basierten Model-Checker in einem Netzwerk nach Anspruch 1, wobei die Menge von Datentypen des Programms die Bezeichnung BOOL für das 1-Bit-Boolesch, SINT für die vorzeichenbehafteten 8-Bit-Ganzzahlen, INT für die vorzeichenbehafteten 16-Bit-Ganzzahlen, DINT für die vorzeichenbehafteten 32-Bit-Ganzzahlen, LINT für die vorzeichenbehafteten 64-Bit-Ganzzahlen, USINT für die vorzeichenlosen 8-Bit-Ganzzahlen, UINT für die vorzeichenlosen 16-Bit-Ganzzahlen, UDINT für die vorzeichenlosen 32-Bit-Ganzzahlen, ULINT für die vorzeichenlosen 64-Bit-Ganzzahlen, REAL für die 32-Bit-Gleitkommazahlen mit einfacher Genauigkeit und LREAL für die 64-Bit-Gleitkommazahlen mit doppelter Genauigkeit aufweist, und
wobei die vordefinierte Modellmenge von Datentypen mit der entsprechenden Menge von Datentypen abgeglichen wird, die die Bezeichnung Boolean für das 1-Bit-Boolesch, int8 für die vorzeichenbehafteten 8-Bit-Ganzzahlen, int16 für die vorzeichenbehafteten 16-Bit-Ganzzahlen, int32 für die vorzeichenbehafteten 32-Bit-Ganzzahlen, int64 für die vorzeichenbehafteten 64-Bit-Ganzzahlen, usint8 für die vorzeichenlosen 8-Bit-Ganzzahlen, uint16 für die vorzeichenlosen 16-Bit-Ganzzahlen, uint32 für die vorzeichenlosen 32-Bit-Ganzzahlen, uint64 für die vorzeichenlosen 64-Bit-Ganzzahlen, float32 für die 32-Bit-Gleitkommazahlen mit einfacher Genauigkeit und float64 für die 64-Bit-Gleitkommazahlen mit doppelter Genauigkeit aufweist.

3. Verfahren zur automatischen Übersetzung von Kontaktplanlogik in einen Satisfiability-Modulo-Theories-basierten Model-Checker in einem Netzwerk nach einem der Ansprüche 1 bis 2, wobei die vordefinierten Modellfunktionen die Funktionen Addition, Subtraktion, Multiplikation, Division, Modulo, Negieren, Absolutwert, Begrenzen, Gleich, Kleiner als, Größer als, Kleiner als oder gleich und Größer als oder gleich umfassen.

4. Verfahren zur automatischen Übersetzung von Kontaktplanlogik in einen Satisfiability-Modulo-Theories-basierten Model-Checker in einem Netzwerk nach Anspruch 3, wobei das Programm ein Rockwell-L5X-Dateiformat ist,
wobei die Komparatoren und arithmetischen Operatoren des Programms die Bezeichnung ADD(a,b,c) für die Addition, SUB(a,b,c) für die Subtraktion, MUL(a,b,c) für die Multiplikation, DIV(a,b,c) für die Division, MOD(a,b,c) für das Modulo, NEG(a,b) für das Negieren, ABS(a,b) für den Absolutwert, LIM(-10,a, 10) für das Begrenzen, EQU(a,b) für Gleich, LES(a,b) für Kleiner als, GRT(a,b) für Größer als, LEQ(a,b) für Kleiner als oder gleich und GEQ(a,b) für Größer als oder gleich aufweisen, und wobei die vordefinierten Modellfunktionen mit den entsprechenden Komparatoren und arithmetischen Operatoren gemäß der Konstruktion c = ctx.mk_add(a, b) für die Addition, c = ctx.mk_sub(a, b) für die Subtraktion, c = ctx.mk_mul(a, b) für die Multiplikation, c = ctx.mk_div(a, b) für die Division, c = ctx.mk_mod(a, b) für das Modulo, b = ctx.mkminus(a) für das Negieren, b = ctx.mk_ite(ctx.mk_lt(a, ctx.mkNumber("0", it)), ctx.mk_minus(a), a) für den Absolutwert, ctx.mk_and(ctx.mk_geq(a, ctx.mkNumber("-10", it)), ctx.mk_leq(a, ctx.mkNumber("10", it))) für das Begrenzen, ctx.mk_eq(a, b) für Gleich, ctx.mk_lt(a, b) für Kleiner als, ctx.mk_gt(a, b) für Größer als, ctx.mk_leq(a, b) für Kleiner als oder gleich und ctx.mk_geq(a, b) für Größer als oder gleich abgeglichen werden.

5. Verfahren zur automatischen Übersetzung von Kontaktplanlogik in einen Satisfiability-Modulo-Theories-basierten Model-Checker in einem Netzwerk nach einem der Ansprüche 1 bis 4, wobei die vordefinierten rekursiven Modellprozeduren eine erste Kontaktübersetzungsprozedur und eine zweite Kontaktübersetzungsprozedur umfassen, die das Übersetzen von Kontakten ermöglichen, sowie eine erste Spulenübersetzungsprozedur, eine zweite Spulenübersetzungsprozedur und eine dritte Spulenübersetzungsprozedur, die das Übersetzen von Spulen ermöglichen,
wobei die erste Kontaktübersetzungsprozedur den Modelleingang oder den aktuell gespeicherten des Modellausgangsspeicherglieds oder Modellvariablenspeicherglieds zurückgibt und die zweite Kontaktübersetzungsprozedur das Negierte des Modelleingangs oder das Negierte des aktuell gespeicherten des Modellausgangsspeicherglieds oder Modellvariablenspeicherglieds zurückgibt, und
wobei die erste Spulenübersetzungsprozedur den von der linken Verbindung empfangenen Wert zuweist, die zweite Spulenübersetzungsprozedur den Speichergliedwert auf wahr setzt, wenn die linke Verbindung wahr ist, und andernfalls den vorherigen Wert beibehält, und die dritte Spulenübersetzungsprozedur den Speichergliedwert auf falsch setzt, wenn die linke Verbindung falsch ist, und andernfalls den vorherigen Wert beibehält.

6. Verfahren zur automatischen Übersetzung von Kontaktplanlogik in einen Satisfiability-Modulo-Theories-basierten Model-Checker in einem Netzwerk nach Anspruch 5, wobei das Programm ein Rockwell-L5X-Dateiformat ist,
wobei die Kontakte des Programms die Bezeichnung XIC(x) zur Überprüfung, ob der Schalter geschlossen ist, was eine 1 nur dann weiterleitet, wenn der Wert auf der linken Seite 1 ist und x gleich 1 ist, sowie XIO(x) zur Überprüfung, ob der Schalter geöffnet ist, was eine 1 nur dann weiterleitet, wenn der Wert auf der linken Seite 1 ist und x gleich 0 ist, aufweisen,
wobei die erste Kontaktübersetzungsprozedur mit der Bezeichnung XIC(x) gemäß der Konstruktion abgeglichen wird
Procedure TranslateXIC(element)
wenn das Element "kein Eingang ist":
element = var2current[element]
gibt Element zurück,
wobei die zweite Kontaktübersetzungsprozedur mit der Bezeichnung XIO(x) gemäß der Konstruktion abgeglichen wird
Procedure TranslateXIO(element)
wenn das Element "kein Eingang ist":
element = var2current[element]
gibt ctx.mk_not(element) zurück, und
wobei die Spulen des Programms die Bezeichnung OTE(y) zum Aktivieren des Ausgangs, was y den Wert 1 zuweist, wenn der Wert auf der linken Seite 1 ist, andernfalls 0, OTL(y) zum Setzen des Ausgangs, was y den Wert 1 zuweist, wenn der Wert auf der linken Seite 1 ist, andernfalls unverändert lässt, und OTU(y) zum Rücksetzen des Ausgangs, was y den Wert 0 zuweist, wenn der Wert auf der linken Seite 1 ist, andernfalls unverändert lässt, umfassen,
wobei die erste Spulenübersetzungsprozedur mit der Bezeichnung OTE(y) gemäß der Konstruktion abgeglichen wird
Procedure TranslateOTE(element)
var2current[element] = element2precondition[element]
gibt var2current[element] zurück
wobei die zweite Spulenübersetzungsprozedur mit der Bezeichnung OTL(y) gemäß der Konstruktion abgeglichen wird
Procedure TranslateOTL(element)
var2current[element] = ctx.mk_or(var2current[element], element2precondition[element])
gibt var2current[element] zurück, und
wobei die dritte Spulenübersetzungsprozedur mit der Bezeichnung OTU(y) gemäß der Konstruktion abgeglichen wird
Procedure TranslateOTU(element)
var2current[element]
ctx.mk_and(ctx.mk_not(element2precondition[element]), var2current[element])
gibt var2current[element] zurück.

7. Verfahren zur automatischen Übersetzung von Kontaktplanlogik in einen Satisfiability-Modulo-Theories-basierten Model-Checker in einem Netzwerk nach Anspruch 1, wobei die Modellausgangsspeicherglieder und Modellvariablenspeicherglieder einen Anfangswert und eine Nächster-Zustand-Funktion speichern, die sie halten, wenn die Schaltung im ersten Zeitschritt gestartet wird.

8. Verfahren zur automatischen Übersetzung von Kontaktplanlogik in einen Satisfiability-Modulo-Theories-basierten Model-Checker in einem Netzwerk nach Anspruch 7, wobei die Modellausgangsspeicherglieder und Modellvariablenspeicherglieder bei jedem nachfolgenden Zeitschritt mit einem neuen Wert aktualisiert werden durch den Wert, der durch die Nächster-Zustand-Funktion ausgedrückt wird.

## Revendications

1. Procédé de traduction automatique de logique à contacts vers un vérificateur de modèle basé sur la satisfiabilité modulo théories dans un réseau comprenant :
- la définition (10) de la topologie dudit réseau en tant que topologie de réseau enrichie basée sur des paquets échangés dans ledit réseau par une inspection de paquets en profondeur qui consiste à écouter le trafic réseau et à inspecter les paquets capturés pour déduire des propriétés du réseau ;
- l'extraction (20) par une procédure d'extraction d'un programme à partir desdits paquets se rapportant à un PLC dans ledit réseau et l'identification des entrées, des sorties, des variables et un schéma à contacts dudit PLC ; dans lequel ladite procédure d'extraction effectue une procédure d'ingénierie inverse pour récupérer et reconstruire ledit programme ;
- la traduction (30) desdites entrées, sorties, variables et ledit schéma à contacts en un modèle formel prédéfini ;
dans lequel ledit modèle formel prédéfini est un vérificateur de modèle de type circuit basé sur la satisfiabilité modulo théories ; dans lequel ledit vérificateur de modèle de type circuit basé sur la satisfiabilité modulo théories :
définit un circuit avec une horloge globale qui divise l'exécution en pas de temps discrets ;
comprend :
- des entrées de modèle en tant que signaux de base de types pris en charge qui prennent une nouvelle valeur à chaque pas de temps ;
- des verrous de sortie de modèle et des verrous de variable de modèle en tant qu'éléments de mémoire basiques pouvant contenir une valeur d'un type pris en charge ;
- des portes logiques ;
- des fonctions de modèle prédéfinies en tant que comparateurs et opérateurs arithmétiques ;
- des constantes en tant que valeurs de signal de types pris en charge qui ne changent jamais de valeur à chacun desdits pas de temps.
; et
dans lequel ladite traduction (30) comprend :
- la traduction de l'ensemble de types de données dudit programme selon un ensemble modèle prédéfini de types de données dudit vérificateur de modèle de type circuit basé sur la satisfaisabilité modulo théories ;
dans lequel :
- ledit programme est un format de fichier Rockwell L5X,
- ledit ensemble de types de données dudit programme comprend les types de données booléen de 1 bit, entiers signés de 8 bits, entiers signés de 16 bits, entiers signés de 32 bits, entiers signés de 64 bits, entiers non signés de 8 bits, entiers non signés de 16 bits, entiers non signés de 32 bits, entiers non signés de 64 bits, virgule flottante à simple précision de 32 bits, virgule flottante à double précision de 64 bits et un tableau de taille variable d'entiers signés de 8 bits, et
- ledit ensemble de modèles prédéfini de types de données comprend les types de données booléen à 1 bit, entiers signés à 8 bits, entiers signés à 16 bits, entiers signés à 32 bits, entiers signés à 64 bits, entiers non signés à 8 bits, entiers non signés à 16 bits, entiers non signés à 32 bits, entiers non signés à 64 bits, virgule flottante à simple précision à 32 bits et virgule flottante à double précision à 64 bits ;
- ledit ensemble modèle prédéfini de types de données est mis en correspondance avec ledit ensemble correspondant de types de données en supprimant ledit type de données de tableau de taille variable d'entiers signés de 8 bits ;
- la traduction desdites entrées dudit PLC en entrées de modèle correspondantes dudit vérificateur de modèle basé sur la satisfaisabilité modulo théories de type circuit du même type dudit ensemble de types de données ;
- la traduction desdites sorties dudit PLC en tant que verrous de sortie de modèle correspondants dudit vérificateur de modèle basé sur la satisfaisabilité modulo théories de type circuit du même type dudit ensemble de types de données ;
- la traduction desdites variables dudit PLC en tant que verrous de variables de modèle correspondants dudit vérificateur de modèle basé sur la satisfiabilité modulo théories de type circuit du même type dudit ensemble de types de données ;
- la traduction de comparateurs et d'opérateurs arithmétiques dudit schéma à contacts en une pluralité de fonctions de modèle prédéfinies dudit vérificateur de modèle de type circuit basé sur la satisfiabilité modulo théories ;
la traduction des contacts et des bobines dudit schéma à contacts selon des procédures récursives de modèle prédéfinies relatives audit ensemble de types de données de modèle prédéfini, auxdites entrées de modèle, auxdits verrous de sortie de modèle, auxdits verrous de variable de modèle et à ladite pluralité de fonctions de modèle prédéfinies, dans lequel lesdits contacts sont des commutateurs qui peuvent bloquer ou permettre la circulation du courant dans une connexion et chacun desdits contacts est commandé par une entrée ou variable booléenne, et dans lequel lesdites bobines sont des affectations à des variables booléennes.

2. Procédé de traduction automatique de logique à contacts vers un vérificateur de modèle basé sur la satisfiabilité modulo théories dans un réseau selon la revendication 1, dans lequel ledit ensemble de types de données dudit programme a la notation BOOL pour ledit booléen de 1 bit, SINT pour lesdits entiers signés de 8 bits, INT pour lesdits entiers signés de 16 bits, DINT pour lesdits entiers signés de 32 bits, LINT pour lesdits entiers signés de 64 bits, USINT pour lesdits entiers non signés de 8 bits, UINT pour lesdits entiers non signés de 16 bits, UDINT pour lesdits entiers non signés de 32 bits, ULINT pour lesdits entiers non signés de 64 bits, REAL pour ladite virgule flottante à simple précision de 32 bits et LREAL pour ladite virgule flottante à double précision de 64 bits, et
dans lequel ledit ensemble modèle prédéfini de types de données est mis en correspondance avec ledit ensemble correspondant de types de données ayant la notation Boolean pour ledit booléen à 1 bit, int8 pour lesdits entiers signés à 8 bits, int16 pour lesdits entiers signés à 16 bits, int32 pour lesdits entiers signés à 32 bits, int64 pour lesdits entiers signés à 64 bits, usint8 pour lesdits entiers non signés à 8 bits, uint16 pour lesdits entiers non signés à 16 bits, uint32 pour lesdits entiers non signés à 32 bits, uint64 pour lesdits entiers non signés à 64 bits, float32 pour ladite virgule flottante à simple précision à 32 bits et float64 pour ladite virgule flottante à double précision à 64 bits.

3. Procédé de traduction automatique de logique à contacts vers un vérificateur de modèle basé sur la satisfaisabilité modulo théories dans un réseau selon l'une des revendications 1 à 2, dans lequel lesdites fonctions de modèle prédéfinies comprennent les fonctions Addition, Soustraction, Multiplication, Division, Modulo, Négation, Valeur absolue, Limite, Égal à, Inférieur à, Supérieur à, Inférieur ou égal à et Supérieur ou égal à.

4. Procédé de traduction automatique de logique à contacts vers un vérificateur de modèle basé sur la satisfiabilité modulo théories dans un réseau selon la revendication 3, dans lequel ledit programme est un format de fichier Rockwell L5X,
dans lequel lesdits comparateurs et opérateurs arithmétiques dudit programme ont la notation ADD(a,b,c) pour ladite Addition, SUB(a,b,c) pour ladite Soustraction, MUL(a,b,c) pour ladite Multiplication, DIV(a,b,c) pour ladite Division, MOD(a,b,c) pour ledit Modulo, NEG(a,b) pour ladite Négation, ABS(a,b) pour ladite Valeur absolue, LIM(-10,a, 10) pour ladite Limite, EQU(a,b) pour ledit Égal à, LES(a,b) pour ledit Inférieur à, GRT(a,b) pour ledit Supérieur à, LEQ(a,b) pour ledit Inférieur ou égal à et GEQ(a,b) pour ledit Supérieur ou égal à, et dans lequel lesdites fonctions de modèle prédéfinies sont mises en correspondance avec lesdits comparateurs et opérateurs arithmétiques correspondants suivant la construction c = ctx.mk_add(a, b) pour ladite Addition, c = ctx.mk_sub(a, b) pour ladite Soustraction, c = ctx.mk_mul(a, b) pour ladite Multiplication, c = ctx.mk_div(a, b) pour ladite Division, c = ctx.mk_mod(a, b) pour ledit Modulo, b = ctx.mkminus(a) pour ladite Négation, b = ctx.mk_ite(ctx.mk_lt(a, ctx.mkNumber("0", it)), ctx.mk_minus(a), a) pour ladite Valeur absolue, ctx.mk_and(ctx.mk_geq(a, ctx.mkNumber("-10", it)), ctx.mk_leq(a, ctx.mkNumber("10", it))) pour ladite Limite, ctx.mk_eq(a, b) pour ledit Égal à, ctx.mk_lt(a, b) pour ledit Inférieur à, ctx.mk_gt(a, b) pour ledit Supérieur à, ctx.mk_leq(a, b) pour ledit Inférieur ou égal à et ctx.mk_geq(a, b) pour ledit Supérieur ou égal à.

5. Procédé de traduction automatique de logique à contacts vers un vérificateur de modèle basé sur la satisfaisabilité modulo théories dans un réseau selon l'une des revendications 1 à 4, dans lequel lesdites procédures récursives de modèle prédéfinies comprennent une première procédure de traduction de contacts et une seconde procédure de traduction de contacts qui permettent de traduire des contacts et une première procédure de traduction de bobines, une deuxième procédure de traduction de bobines et une troisième procédure de traduction de bobines qui permettent de traduire des bobines,
dans lequel ladite première procédure de traduction de contacts renvoie ladite entrée de modèle ou la valeur actuellement stockée dudit verrou de sortie de modèle ou verrou de variable de modèle et ladite seconde procédure de traduction de contacts renvoie la négation de ladite entrée de modèle ou la négation actuellement stockée dudit verrou de sortie de modèle ou verrou de variable de modèle, et
dans lequel ladite première procédure de traduction de bobines attribue la valeur reçue depuis la connexion gauche, ladite deuxième procédure de traduction de bobines définit la valeur de verrouillage sur vrai si la connexion gauche est vraie, sinon, conserve la valeur précédente et ladite troisième procédure de traduction de bobines définit la valeur de verrouillage sur faux si la connexion gauche est fausse, sinon, conserve la valeur précédente.

6. Procédé de traduction automatique de logique à contacts vers un vérificateur de modèle basé sur la satisfiabilité modulo théories dans un réseau selon la revendication 5, dans lequel ledit programme est un format de fichier Rockwell L5X,
dans lequel lesdits contacts dudit programme comprennent la notation XIC(x) pour examiner si ledit commutateur est fermé, qui propage 1 uniquement si la valeur à gauche est 1 et x est 1, et XIO(x) pour examiner si ledit commutateur est ouvert, qui propage 1 uniquement si la valeur à gauche est 1 et x est 0,
dans lequel ladite procédure de traduction des premiers contacts correspond à ladite notation XIC(x) suivant la construction
Procedure TranslateXIC(element)
si l'élément « n'est pas entrée » :
element = var2current[element]
return element,
dans lequel ladite procédure de traduction de seconds contacts correspond à ladite notation XIO(x) suivant la construction
Procedure TranslateXIO(element)
si l'élément « n'est pas entrée » :
element = var2current[element]
return ctx.mk_not(element), et
dans lequel lesdites bobines dudit programme comprennent la notation OTE(y) pour la sortie d'énergie, qui attribue 1 à y si la valeur sur la gauche est 1 sinon 0, OTL(y) pour le verrouillage de sortie, qui attribue 1 à y si la valeur sur la gauche est 1 sinon la laisse inchangée, et OTU(y) pour le déverrouillage de sortie, qui attribue 0 à y si la valeur sur la gauche est 1 sinon la laisse inchangée,
dans lequel ladite procédure de translation de premières bobines correspond à ladite notation OTE(y) suivant la construction
Procedure TranslateOTE(element)
var2current[element] = element2precondition[element]
return var2current[element]
dans lequel ladite procédure de translation de deuxièmes bobines correspond à ladite notation OTL(y) suivant la construction
Procedure TranslateOTL(element)
var2current[element] = ctx.mk_or(var2current[element], element2precondition[element])
return var2current[element], and
dans lequel ladite procédure de traduction de troisièmes bobines correspond à ladite notation OTU(y) suivant la construction
Procedure TranslateOTU(element)
var2current[element]
ctx.mk_and(ctx.mk_not(element2precondition[element]), var2current[element])
return var2current[element].

7. Procédé de traduction automatique de logique à contacts vers un vérificateur de modèle basé sur la satisfaisabilité modulo théories dans un réseau selon la revendication 1, dans lequel lesdits verrous de sortie de modèle et verrous de variable de modèle stockent une valeur initiale et une fonction d'état suivant qu'ils maintiennent lorsque ledit circuit est amorcé au premier pas de temps.

8. Procédé de traduction automatique de logique à contacts vers un vérificateur de modèle basé sur la satisfaisabilité modulo théories dans un réseau selon la revendication 7, dans lequel lesdits verrous de sortie de modèle et lesdits verrous de variable de modèle sont mises à jour avec une nouvelle valeur à chaque pas de temps ultérieur par la valeur exprimée par ladite fonction d'état suivant.
